(19) **Europäisches Patentamt / European Patent Office / Office européen des brevets**

(11) **EP 4 787 793 A1**

(12) **EUROPEAN PATENT APPLICATION**
published in accordance with Art. 153(4) EPC

(43) Date of publication:
**05.08.2026 Bulletin 2026/32**

(21) Application number: **24886006.6**

(22) Date of filing: **04.09.2024**

(51) International Patent Classification (IPC):
**H04L 27/26** (2006.01)

(52) Cooperative Patent Classification (CPC):
**H04L 27/26**

(86) International application number:
**PCT/KR2024/013361**

(87) International publication number:
**WO 2025/095327 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 KR 20230149516**
**20.11.2023 KR 20230161299**

(71) Applicant: **Samsung Electronics Co., Ltd.**
**Suwon-si, Gyeonggi-do 16677 (KR)**

(72) Inventors:
• **HAN, Jihoon**
**Suwon-si Gyeonggi-do 16677 (KR)**
• **SOHN, Daeho**
**Suwon-si Gyeonggi-do 16677 (KR)**
• **JANG, Moonheok**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND METHOD FOR FAST FOURIER TRANSFORM**

(57) According to an embodiment, an electronic device may comprise: a memory; and at least one processing circuit for orthogonal frequency division multiplexing (OFDM) demodulation for changing the domain of a symbol sequence from a first domain to a second domain. The at least one processing circuit may be configured to acquire a first symbol sequence for the first domain on the basis of a reception signal acquired from an external electronic device. The at least one processing circuit may be configured to acquire a second symbol sequence for the second domain by performing, on the first symbol sequence, a fast Fourier transform (FFT) operation using a cyclic shift operation. The FFT operation using the cyclic shift operation may include an operation of changing, for each FFT index among FFT indexes for the second domain according to an FFT size, a value of a most significant bit (MSB) of a bit sequence of the FFT index from 0 to 1 or from 1 to 0.

FIG. 9

Processed by Luminess, 75001 PARIS (FR)

EP 4 787 793 A1

**Description**

**[Technical Field]**

The present disclosure relates to an electronic device and a method for fast Fourier transform.

**[Background Art]**

In a wireless communication system, when receiving a signal, a fast Fourier transform (FFT) operation is used to change a sequence related to a time domain into a sequence related to a frequency domain. When transmitting a signal, a cyclic extension operation for inserting a cyclic prefix (CP) into the signal is used to prevent inter channel interference.
The above-described information may be provided as a related art for the purpose of helping understanding of the present disclosure. No argument or decision is made as to whether any of the above description may be applied as a prior art related to the present disclosure.

**[Disclosure]**

**[Technical Solution]**

According to an embodiment, an electronic device may include memory, and at least one processing circuit for orthogonal frequency division multiplexing (OFDM) demodulation to change a domain of a symbol sequence from a first domain to a second domain. The at least one processing circuit may be configured to obtain, based on a receiving signal obtained from an external electronic device, a first symbol sequence related to the first domain. The at least one processing circuit may be configured to obtain a second symbol sequence related to the second domain by performing a fast Fourier transform (FFT) operation using a cyclic shift operation on the first symbol sequence. For each fast Fourier transform (FFT) index of FFT indexes according to an FFT size, related to the second domain, the FFT operation using the cyclic shift operation may comprise an operation to change a value of the most significant bit (MSB) of a bit sequence of a corresponding FFT index from 0 to 1 or 1 to 0.
According to an embodiment, a method performed by an electronic device may comprise obtaining, based on a receiving signal obtained from an external electronic device, a first symbol sequence related to a first domain. The method may comprise obtaining a second symbol sequence related to a second domain by performing a fast Fourier transform (FFT) operation using a cyclic shift operation on the first symbol sequence. For each fast Fourier transform (FFT) index of FFT indexes according to an FFT size, related to the second domain, the FFT operation using the cyclic shift operation may comprise an operation to change a value of the most significant bit (MSB) of a bit sequence of a corresponding FFT index from 0 to 1 or 1 to 0.

**[Description of the Drawings]**

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5A illustrates an example of an operation of an orthogonal frequency division multiplexing (OFDM) modulation circuit.
FIG. 5B illustrates an example of an operation of an OFDM demodulation circuit.
FIG. 6A illustrates an example of a cyclic shift operation of an OFDM modulation circuit.
FIG. 6B illustrates an example of a cyclic shift operation of an OFDM demodulation circuit.
FIG. 7 illustrates a signal flow graph for an FFT operation of a decimation in frequency fast Fourier transform (DIF FFT) structure.
FIG. 8 illustrates a signal flow graph for an FFT operation of a decimation in time fast Fourier transform (DIT FFT) structure.
FIG. 9 illustrates a signal flow graph for an FFT operation using a cyclic shift operation of a DIT FFT structure.
FIG. 10 illustrates an OFDM demodulation circuit for performing an FFT operation for a cyclic shift operation and a reordering operation.

FIG. 11 illustrates a flowchart related to an operation of an electronic device for performing an FFT operation using a cyclic shift operation.

FIG. 12 illustrates an example of a configuration of a processing device.

[**Mode for Invention**]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a resource (e.g., symbol, slot, subframe, radio frame, subcarrier, resource element (RE), resource block (RB), bandwidth part (BWP), occasion) a term for a calculation state (e.g., step, operation, procedure), a term referring to data (e.g., packet, user stream, information, bit, symbol, codeword), a term referring to a channel, a term referring to a network entity, a term referring to a component of a device, and the like, that are used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

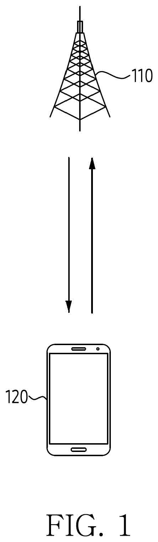

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

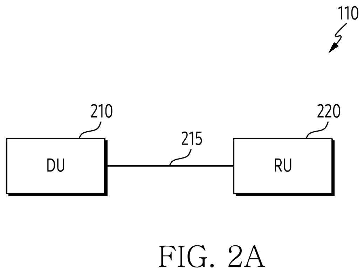

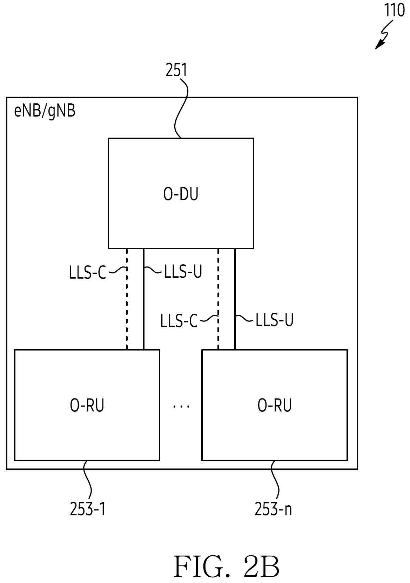

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations is reduced, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

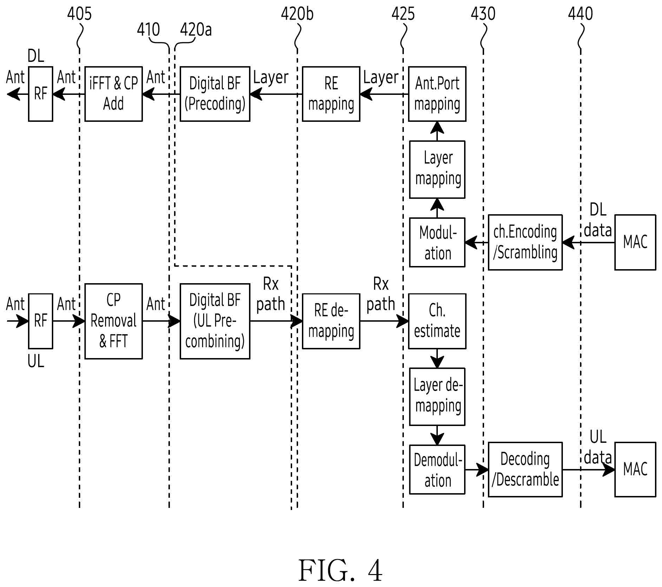

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

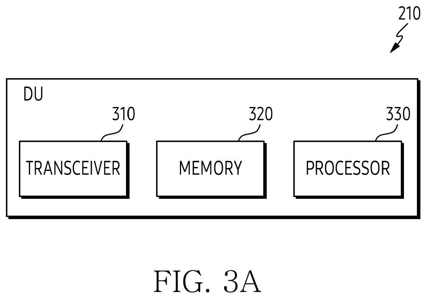

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

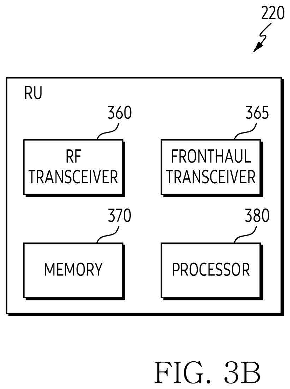

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments, may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure. Hereinafter, various embodiments of the present disclosure are described using the standard term of eCPRI or O-RAN, but are not limited thereto. For example, in various embodiments of the present disclosure, a CPRI standard may be used as a fronthaul interface.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.
2) ecpriReserved (3 bits): This parameter is reserved for further use of eCPRI.

3) ecpriConcatenation (1 bit): This parameter indicates when eCPRI concatenation is in use.

4) ecpriMessage (1 byte): This parameter indicates a type of a service carried by a message type. For example, the parameter indicates an IQ data message, a real-time control data message, or a transport network delay measurement message.

5) ecpriPayload (2 bytes): This parameter indicates a byte size of a payload portion of the eCPRI message.

6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.

7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.

2) BandSector_ID: Aggregated cell identifier (identification of band and sector supported by O-RU).

3) CC_ID: CC_ID identifies carrier components supported by the O-RU.

4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.

1) sectionType=0: Used to indicate resource blocks or symbols not used in the DL or the UL.

2) sectionType=1: Used for most DL/UL wireless channels. Herein, "most" refers to channels that do not require time or frequency offsets such as those required for mixed numerology channels.

3) sectionType=2: reserved for further use

4) sectionType=3: PRACH and mixed-numerology channels. Channels that require time or frequency offsets or differ from the nominal SCS value(s).

5) sectionType=4: reserved for further use

6) sectionType=5: UE scheduling information. Transmits UE scheduling information so that the RU can perform real-time BF weight calculation (O-RAN optional BF method)

7) sectionType=6: Transmit UE-specific channel information. Periodically transmits UE channel information so that the RU can perform real-time BF weight calculation (O-RAN optional BF method)

8) sectionType=7: Used for LAA support

In the following specification, an electronic device (e.g., the base station 110 or the terminal 120 of FIG. 1) may include at least one processing circuit for orthogonal frequency division multiplexing (OFDM) demodulation to change a domain of a symbol sequence from a first domain to a second domain. The at least one processing circuit may include memory (or a buffer) for the OFDM demodulation. For example, the at least one processing circuit may be referred to as an OFDM demodulation circuit. Hereinafter, a technical feature for minimizing (or optimizing) the memory and a delay time of the OFDM demodulation circuit will be described.

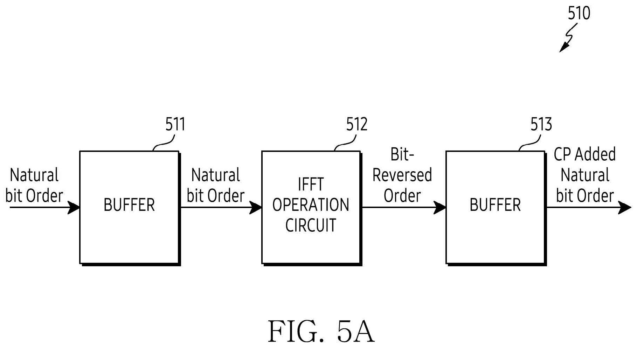

FIG. 5A illustrates an example of an operation of an orthogonal frequency division multiplexing (OFDM) modulation circuit.

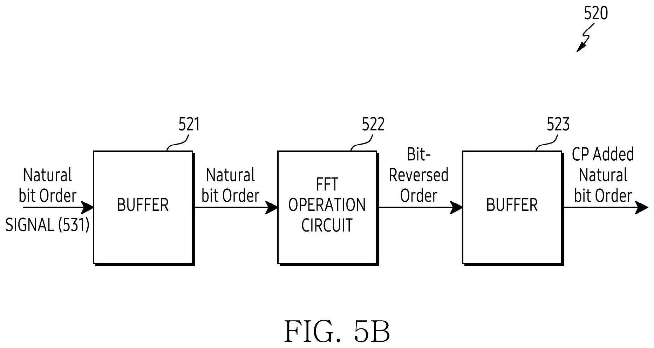

FIG. 5B illustrates an example of an operation of an OFDM demodulation circuit.

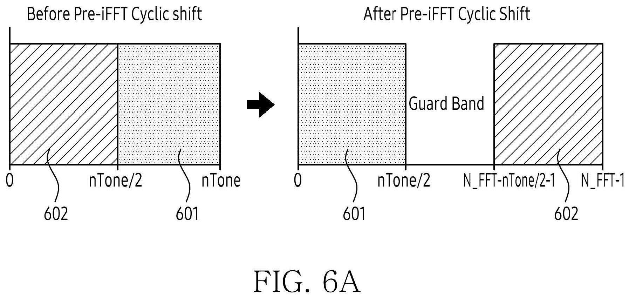

FIG. 6A illustrates an example of a cyclic shift operation of an OFDM modulation circuit.

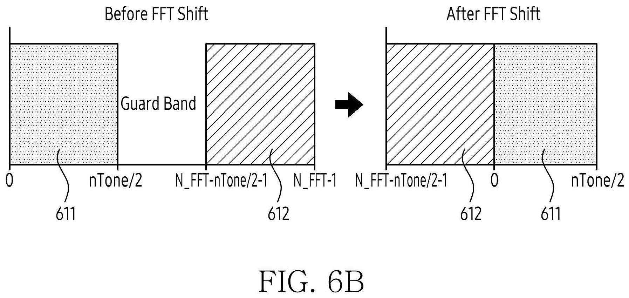

FIG. 6B illustrates an example of a cyclic shift operation of an OFDM demodulation circuit.

A system (e.g., a base station or user equipment (UE)) of a new radio (NR) standard or a long term evolution (LTE) standard may include the OFDM modulation circuit and the OFDM demodulation circuit. In FIG. 5A, an example of the OFDM modulation circuit will be described. In FIG. 5B, an example of the OFDM demodulation circuit will be described.

Referring to FIG. 5A, an OFDM modulation circuit 510 may change a domain of a signal (or a symbol sequence, a symbol) from a frequency domain to a time domain based on performing an inverse fast Fourier transform (IFFT) operation. As an example, a base station 110 (e.g., an RU 220) may change a domain of a downlink signal from the frequency domain to the time domain by using the OFDM modulation circuit 510. The base station 110 may transmit the downlink signal of the time domain to a terminal 120. As an example, the terminal 120 may change a domain of an uplink signal from the frequency domain to the time domain by using the OFDM modulation circuit 510. The terminal 120 may transmit the uplink signal of the time domain to the base station 110.

According to an embodiment, the OFDM modulation circuit 510 may include a buffer 511, an inverse fast Fourier transform (IFFT) operation circuit 512, and/or a buffer 513.

For example, the buffer 511 may be used for a cyclic shift operation. For example, the OFDM modulation circuit 510 may perform the cyclic shift operation on a signal (or a symbol sequence, a symbol). The cyclic shift operation may be referred to as a pre-IFFT operation or an IFFT shift operation.

Referring to FIG. 6A, for the cyclic shift operation, the signal (or the symbol sequence, the symbol) may be divided into a signal 601 of a first band (e.g., a high band) and a signal 602 of a second band (e.g., a low band). For example, the number of tones related to the signal may be n. The number of tones related to the signal 601 may be n/2. The number of tones related to the signal 602 may be n/2.

The OFDM modulation circuit 510 may change an order of the signal 601 and the signal 602. The OFDM modulation circuit 510 may configure the signal 601 as a front-end part of an input for an IFFT operation. The OFDM modulation circuit 510 may configure the signal 602 as a rear-end part of the input for the IFFT operation. The OFDM modulation circuit 510 may configure a guard band between the signal 601 and the signal 602. The OFDM modulation circuit 510 may set input values for the IFFT operation corresponding to the guard band to 0 to configure the guard band. Based on the above-described process, the OFDM modulation circuit 510 may perform the cyclic shift operation. N_FFT of FIG. 6A may indicate an FFT size.

The OFDM modulation circuit 510 may use the buffer 511 to perform the cyclic shift operation. A size of the buffer 511 may be configured to be twice the maximum number (or the FFT size) of tones of the signal. For example, for the buffer 511, a dual buffer having a depth of twice the maximum number (or the FFT size) of tones of the signal may be used.

Referring back to FIG. 5A, the IFFT operation circuit 512 may be configured as a decision in frequency (DIF) FFT structure of the Cooley-Tukey FFT algorithm for a pipelined FFT. When the IFFT operation circuit 512 is configured as a DIF IFFT structure, based on a signal (or a symbol sequence, a symbol) of a natural bit order (or a natural order) being input to the IFFT operation circuit 512, a signal (or a symbol sequence, a symbol) of a bit-reversed order may be output.

As described above, when the IFFT operation circuit 512 is configured as the DIF IFFT structure, since the signal (or the symbol sequence, the symbol) of the bit-reversed order is output, the OFDM modulation circuit 510 may perform a reordering operation (or a function) to change the signal (or the symbol sequence, the symbol) back to the natural bit order. The reordering operation (or the function) may be set as in Equation 1 below.

【Equation 1】

$$y = \sum_{n=0}^{\left\lfloor log_2^{(N_{FFT}-1)} \right\rfloor} \left\{ 2^{\left(\left\lfloor log_2^{(N_{FFT}-1)} \right\rfloor - n\right)} \left( \left\lfloor \frac{x}{2^n} \right\rfloor \ mod \ 2 \right) \right\}$$

Referring to the Equation 1, x is a natural order index. y is a bit-reversed order index. NFFT is a size of FFT.

The buffer 513 may be used for a cyclic extension operation. For example, the OFDM modulation circuit 510 may perform the cyclic extension operation on an output signal of the IFFT operation circuit 512. For example, the OFDM modulation circuit 510 may perform the cyclic extension operation based on inserting a cyclic prefix (CP) into a signal. The cyclic extension operation may be referred to as a CP insertion operation.

Referring to FIG. 5B, an OFDM demodulation circuit 520 may change a domain of a signal (or a symbol sequence, a symbol) from a time domain to a frequency domain based on performing a fast Fourier transform (FFT) operation. As an example, the base station 110 (e.g., the RU 220) may receive an uplink signal of the time domain from the terminal 120. The base station 110 may change a domain of the uplink signal from the time domain to the frequency domain by using the OFDM demodulation circuit 520. As an example, the terminal 120 may receive a downlink signal of the time domain from the base station 110. The terminal 120 may change a domain of the downlink signal from the time domain to the frequency domain by using the OFDM demodulation circuit 520.

According to an embodiment, the OFDM demodulation circuit 520 may include a buffer 521, a fast Fourier transform (FFT) operation circuit 522, and/or a buffer 523.

For example, the buffer 521 may be used for a digital auto gain control (AGC) operation. The base station 110 (or the terminal 120) may receive an RF signal by using an antenna and may obtain a signal 531 amplified through a radio frequency (RF) auto gain control (AGC) operation. Since the RF AGC operation cannot apply a gain to the RF signal in a unit of an OFDM symbol, the digital AGC operation may be performed in the OFDM demodulation circuit 520. For example, the digital AGC operation may obtain average data (e.g., uplink average data or downlink average data) related to power in a unit of a digital bit by obtaining (or measuring, identifying) power of all OFDM symbols.

The OFDM demodulation circuit 520 may use the buffer 521 to perform the digital AGC operation. For example, the OFDM demodulation circuit 520 may obtain power of all OFDM symbols of the signal 531 to perform the digital AGC operation. The buffer 521 may be used to obtain the power of all OFDM symbols of the signal 531. For a pipelined FFT, a size of the buffer 521 may be configured to be twice the maximum number (or an FFT size, an FFT point size) of tones of the signal 531. For example, for the buffer 521, a dual buffer having a depth of twice the maximum number (or the FFT size) of tones of the signal 531 may be used.

The FFT operation circuit 522 may be configured as a decimation in frequency (DIF) FFT structure of the Cooley-Tukey FFT algorithm for the pipelined FFT. When the FFT operation circuit 522 is configured as the DIF FFT structure, based on a signal (e.g., the signal 531) (or a symbol sequence, a symbol) of a natural bit order (or a natural order) being input to the FFT operation circuit 522, a signal (or a symbol sequence, a symbol) of a bit-reversed order may be output.

As described above, when the FFT operation circuit 522 is configured as the DIF FFT structure, since the signal (or the symbol sequence, the symbol) of the bit-reversed order is output, the OFDM demodulation circuit 520 may perform a reordering operation (or a function) to change the signal (or the symbol sequence, the symbol) back to the natural bit order. The reordering operation (or the function) may be set as in the Equation 1 described above.

The buffer 523 may be used for the reordering operation and a cyclic shift operation. For example, the OFDM demodulation circuit 520 may perform the reordering operation and the cyclic shift operation on the signal (or the symbol sequence, the symbol). The cyclic shift operation may be referred to as a post-FFT operation or an FFT shift operation.

Referring to FIG. 6B, for the cyclic shift operation, the signal (or the symbol sequence, the symbol) may be divided into a signal 612 of a first band (e.g., a high band) and a signal 611 of a second band (e.g., a low band). The signal 611 may be related to the signal 601 of FIG. 6A. The signal 612 may be related to the signal 602 of FIG. 6A. For example, the number of tones related to the signal may be n. The number of tones related to the signal 611 may be n/2. The number of tones related to the signal 612 may be n/2.

The OFDM demodulation circuit 520 may change an order of the signal 611 and the signal 612. For example, the signal 611 may be a front-end part of an output of an FFT operation. The signal 612 may be a rear-end part of the output of the FFT operation. A guard band may be configured between the signal 611 and the signal 612. The OFDM demodulation circuit 520 may remove the guard band and change the order of the signal 611 and the signal 612. The OFDM demodulation circuit 520 may configure the signal 612 as a front-end part of an output of the OFDM demodulation circuit 520. The OFDM demodulation circuit 520 may configure the signal 611 as a rear-end part of the output of the OFDM demodulation circuit 520. N_FFT of FIG. 6B may indicate an FFT size.

Referring back to FIG. 5B, the OFDM demodulation circuit 520 may use the buffer 523 to perform the reordering operation and the cyclic shift operation. A size of the buffer 523 may be configured to be twice the maximum number (or an FFT size) of tones of a signal. For example, for the buffer 523, a dual buffer having a depth of twice the maximum number (or the FFT size) of tones of the signal may be used.

As in FIG. 5A and FIG. 5B, the IFFT operation circuit 512 and the FFT operation circuit 522 may be configured as the DIF FFT structure. For example, a size of memory for an FFT operation circuit (or an IFFT operation circuit) configured as the DIF FFT structure may be smaller than a size of memory for an FFT operation circuit (or an IFFT operation circuit) configured as a decimation in time fast Fourier transform (DIT FFT) structure. Accordingly, the IFFT operation circuit and the FFT operation circuit may be configured as the DIF FFT structure.

According to an embodiment, in a wireless communication system, multiple antennas may be used for spatial multiplexing, reduction of inter-signal interference, diversity, and/or improvement of reliability. As the number of antennas increases, an FFT point size (or an FFT size) due to real-time multi-antenna signal processing and bandwidth expansion may increase. As the FFT point size increases, an amount of hardware resource usage (e.g., memory usage) in an OFDM demodulation circuit may increase.

The increase in hardware resource usage as described above may cause an increase in latency of a system and degradation of a response speed. Capital expenditures and operating expenditures due to an increase in power consumption may increase. In addition, due to an increase in heat generation, a size of a product for heat dissipation may increase. Accordingly, a technical feature for preventing this in the OFDM demodulation circuit may be required. Hereinafter, a technical feature for reducing the hardware resource usage in the OFDM demodulation circuit will be described. Specifically, a technical feature for optimizing memory of the OFDM demodulation circuit according to a change of an FFT algorithm will be described below.

First, a discrete Fourier transform (DFT) operation for the FFT operation may be configured as in Equation 2.

【Equation 2】

$$X(k) = \sum_{n=0}^{N-1} x(n) W_N^{nk}$$

Referring to the Equation 2, n is a time domain index. k is a frequency domain index. $W_N^{nk}$ is a twiddle factor.

For example, the twiddle factor may be configured as in Equation 3.

【Equation 3】

$$W_N^{nk} = e^{-j2\pi nk/N}$$

Based on the above-described DFT operation, the FFT operation may be configured. For the FFT operation, with respect to $N=2^p$ complex inputs x(n), a signal flow graph of p stages (or steps) may be configured, and N/2 butterfly structure operations may be performed per stage.

Hereinafter, for convenience of description, a 16-point FFT operation will be described below. However, this is for convenience of description, and an FFT size may be changed according to an embodiment.

When the Equation 2 described above is decomposed into binary stages, it may be configured as in Equation 4.

【Equation 4】

$$X(k_1 + 2k_2 + 4k_3 + 8k_4)$$

$$= \sum_{n_4=0}^{1} \sum_{n_3=0}^{1} \sum_{n_2=0}^{1} \sum_{n_1=0}^{1} x(\frac{N}{2}n_1 + \frac{N}{4}n_2 + \frac{N}{8}n_3 + \frac{N}{16}n_4) W_N^{(\frac{N}{2}n_1 + \frac{N}{4}n_2 + \frac{N}{8}n_3 + \frac{N}{16}n_4)(k_1 + 2k_2 + 4k_3 + 8k_4)}$$

Based on the FFT operation configured as in the Equation 4, an OFDM demodulation circuit of the DIF FFT structure or the DIT FFT structure may be configured. Hereinafter, an FFT operation of the DIF FFT structure or the DIT FFT structure and a signal flow graph according to a corresponding FFT operation will be described.

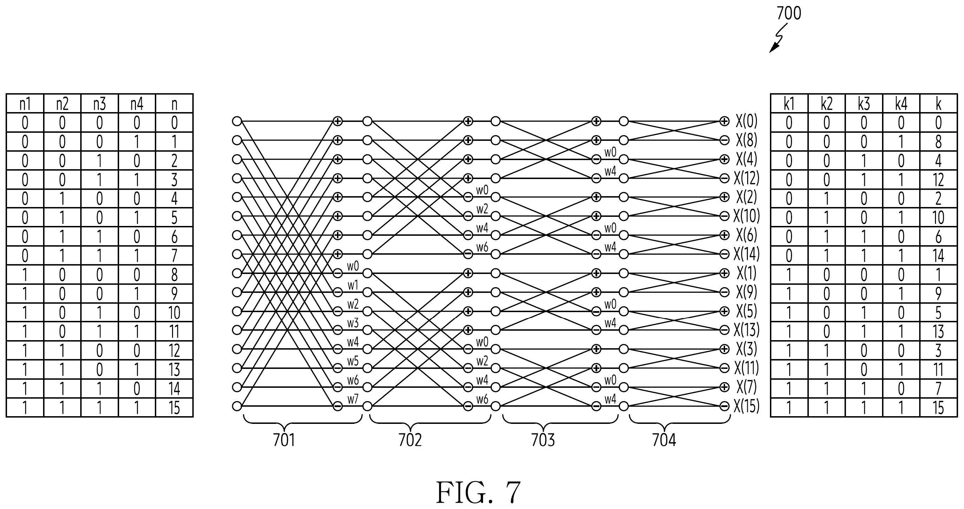

FIG. 7 illustrates a signal flow graph for an FFT operation of a decimation in frequency fast Fourier transform (DIF FFT) structure.

Referring to FIG. 7, the Equation 4 may be developed as in Equation 5. According to a development of $n_1$ (that is, $\sum_{n_1=0}^{1}$ ) in the Equation 4, the FFT operation may be configured as in the Equation 5.

【Equation 5】

$$X(k_1 + 2k_2 + 4k_3 + 8k_4)$$

$$= \sum_{n_4=0}^{1} \sum_{n_3=0}^{1} \sum_{n_2=0}^{1} [x\left(\frac{N}{4}n_2 + \frac{N}{8}n_3 + \frac{N}{16}n_4\right) W_N^{\left(\frac{N}{4}n_2 + \frac{N}{8}n_3 + \frac{N}{16}n_4\right)(k_1 + 2k_2 + 4k_3 + 8k_4)}$$

$$+ x\left(\frac{N}{2} + \frac{N}{4}n_2 + \frac{N}{8}n_3 + \frac{N}{16}n_4\right) W_N^{\left(\frac{N}{2} + \frac{N}{4}n_2 + \frac{N}{8}n_3 + \frac{N}{16}n_4\right)(k_1 + 2k_2 + 4k_3 + 8k_4)}]$$

In the Equation 5, according to developments of $n_2$, $n_3$, and $n_4$, the FFT operation may be configured as in Equation 6.

【Equation 6】

$$X(k_1 + 2k_2 + 4k_3 + 8k_4)$$

$$=
\begin{bmatrix}
\begin{bmatrix}
\begin{bmatrix}
\{x(0) + (-1)^{k_1}x\left(\frac{8N}{16}\right)\} W_N^{k_1\left(\frac{N}{4}n_2 + \frac{N}{8}n_3 + \frac{N}{16}n_4\right)} \\
+(-1)^{k_2}\{x\left(\frac{4N}{16}\right) + (-1)^{k_1}x\left(\frac{12N}{16}\right)\} W_N^{k_1\left(\frac{N}{4}n_2 + \frac{N}{8}n_3 + \frac{N}{16}n_4\right)}
\end{bmatrix} W_N^{2k_2\left(\frac{N}{8}n_3 + \frac{N}{16}n_4\right)} \\
+(-1)^{k_3}
\begin{bmatrix}
\{x\left(\frac{2N}{16}\right) + (-1)^{k_1}x\left(\frac{10N}{16}\right)\} W_N^{k_1\left(\frac{N}{4}n_2 + \frac{N}{8}n_3 + \frac{N}{16}n_4\right)} \\
+(-1)^{k_2}\{x\left(\frac{6N}{16}\right) + (-1)^{k_1}x\left(\frac{14N}{16}\right)\} W_N^{k_1\left(\frac{N}{4}n_2 + \frac{N}{8}n_3 + \frac{N}{16}n_4\right)}
\end{bmatrix} W_N^{2k_2\left(\frac{N}{8}n_3 + \frac{N}{16}n_4\right)}
\end{bmatrix} W_N^{4k_3\left(\frac{N}{16}n_4\right)} \\
+(-1)^{k_4}
\begin{bmatrix}
\begin{bmatrix}
\{x\left(\frac{N}{16}\right) + (-1)^{k_1}x\left(\frac{9N}{16}\right)\} W_N^{k_1\left(\frac{N}{4}n_2 + \frac{N}{8}n_3 + \frac{N}{16}n_4\right)} \\
+(-1)^{k_2}\{x\left(\frac{5N}{16}\right) + (-1)^{k_1}x\left(\frac{13N}{16}\right)\} W_N^{k_1\left(\frac{N}{4}n_2 + \frac{N}{8}n_3 + \frac{N}{16}n_4\right)}
\end{bmatrix} W_N^{2k_2\left(\frac{N}{8}n_3 + \frac{N}{16}n_4\right)} \\
+(-1)^{k_3}
\begin{bmatrix}
\{x\left(\frac{3N}{16}\right) + (-1)^{k_1}x\left(\frac{11N}{16}\right)\} W_N^{k_1\left(\frac{N}{4}n_2 + \frac{N}{8}n_3 + \frac{N}{16}n_4\right)} \\
+(-1)^{k_2}\{x\left(\frac{7N}{16}\right) + (-1)^{k_1}x\left(\frac{15N}{16}\right)\} W_N^{k_1\left(\frac{N}{4}n_2 + \frac{N}{8}n_3 + \frac{N}{16}n_4\right)}
\end{bmatrix} W_N^{2k_2\left(\frac{N}{8}n_3 + \frac{N}{16}n_4\right)}
\end{bmatrix} W_N^{4k_3\left(\frac{N}{16}n_4\right)}
\end{bmatrix}$$

A signal flow graph 700 may be configured according to the Equation 6. The signal flow graph 700 may illustrate an FFT operation. For example, referring to the signal flow graph 700, as the FFT operation on a symbol sequence (or a symbol) configured based on a natural bit order is performed, a symbol sequence (or a symbol) configured based on a bit-reversed order may be output (or obtained). Accordingly, in order to arrange the symbol sequence (or arrange an FFT index (a time domain index)) configured based on the bit-reversed order, all data related to the symbol sequence may be stored in memory (e.g., the buffer 512 of FIG. 5A) and then output.

According to an embodiment, the signal flow graph 700 may be configured with a plurality of stages. For example, the signal flow graph 700 may include a stage 701, a stage 702, a stage 703, and a stage 704. An OFDM demodulation circuit may perform an operation of the Equation 6 by sequentially performing operations related to the stage 701 to the stage 704.

According to an embodiment, in an OFDM demodulation circuit (e.g., the OFDM demodulation circuit 520), a buffer (e.g., the buffer 521) for an input of an FFT operation circuit (e.g., the FFT operation circuit 522) may be used for a digital AGC operation. When the digital AGC operation is not performed, the buffer for the input of the FFT operation circuit may be omitted. However, when the digital AGC operation is not performed, since a wide fixed-bit structure of an FFT is required, it is more efficient to maintain the buffer for the input of the FFT operation circuit in the OFDM demodulation circuit.

When the FFT operation circuit is configured as a DIT FFT structure, a signal may be output in the natural bit order from the FFT operation circuit. When the signal is output in the natural bit order from the FFT operation circuit, a buffer (e.g., the buffer 523) for an output of the OFDM demodulation circuit may be omitted. For example, although a size of memory for the FFT operation circuit configured as the DIT FFT structure may be larger than a size of memory for an FFT operation circuit (or an IFFT operation circuit) configured as a DIF FFT structure, when the buffer (e.g., the buffer 523) for the output of the OFDM demodulation circuit is omitted, memory of the OFDM demodulation circuit may be greatly reduced.

Accordingly, hereinafter, a structure of the OFDM demodulation circuit that does not include the buffer (e.g., the buffer 523) for the output of the OFDM demodulation circuit by using the FFT operation circuit configured as the DIT FFT structure will be described.

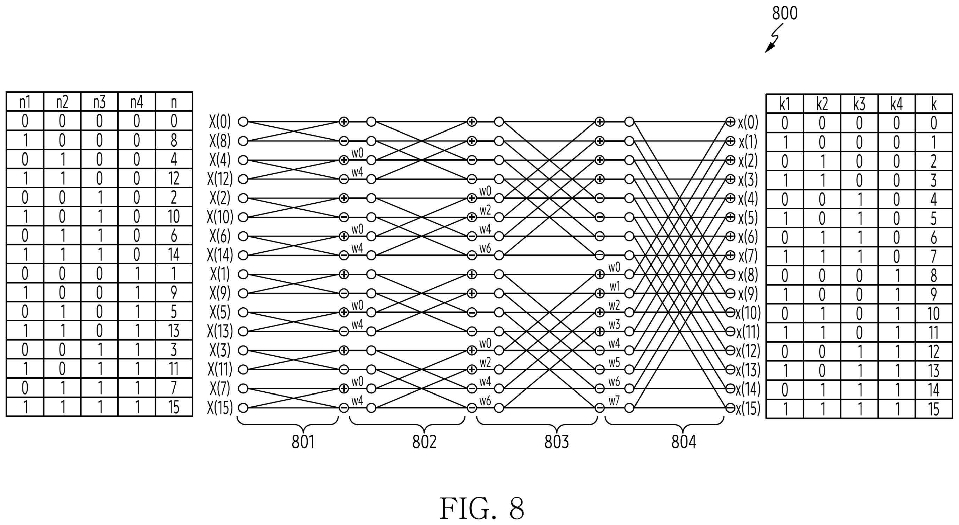

FIG. 8 illustrates a signal flow graph for an FFT operation of a decimation in time fast Fourier transform (DIT FFT) structure.

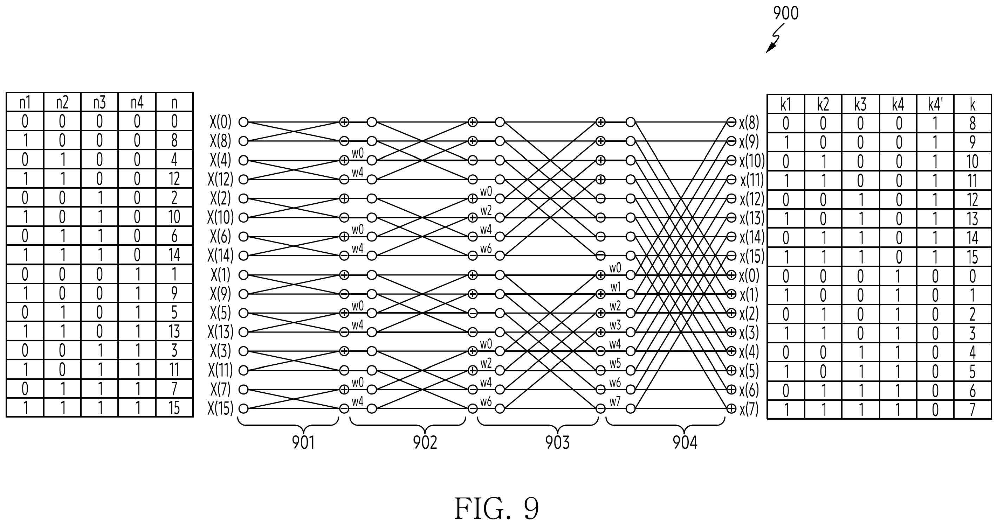

FIG. 9 illustrates a signal flow graph for an FFT operation using a cyclic shift operation of a DIT FFT structure.

Referring to FIG. 8, the Equation 4 described above may be developed as the Equation 5 described above. In the Equation 5, $W_N^{(\frac{N}{2})(k_1+2k_2+4k_3+8k_4)}$ may be configured as in Equation 7.

【Equation 7】

$$W_N^{(\frac{N}{2})(k_1+2k_2+4k_3+8k_4)} = \begin{cases} 1, & (k_1 + 2k_2 + 4k_3 + 8k_4) = even \\ -1, & (k_1 + 2k_2 + 4k_3 + 8k_4) = odd \end{cases}$$

Referring to the Equation 7, when $k_1 + 2k_2 + 4k_3 + 8k_4$ is an even number, a value of $W_N^{(\frac{N}{2})(k_1+2k_2+4k_3+8k_4)}$ is 1. When $k_1 + 2k_2 + 4k_3 + 8k_4$ is an odd number, a value of $W_N^{(\frac{N}{2})(k_1+2k_2+4k_3+8k_4)}$ is -1. Whether $k_1 + 2k_2 + 4k_3 + 8k_4$ is an even number or an odd number may be determined according to $k_1$. Accordingly, the Equation 7 may be changed again as in Equation 8. In addition, $W_N^{(\frac{N}{4}n_2)(4k_3+8k_4)}$ and $W_N^{(\frac{N}{4}n_2)(k_1+2k_2+4k_3+8k_4)}$ may be configured as in Equation 9 and Equation 10, respectively.

【Equation 8】

$$W_N^{(\frac{N}{2})(k_1+2k_2+4k_3+8k_4)} = (-1)^{k_1}$$

【Equation 9】

$$W_N^{(\frac{N}{4}n_2)(4k_3+8k_4)} = 1$$

【Equation 10】

$$W_N^{(\frac{N}{4}n_2)(k_1+2k_2+4k_3+8k_4)} = W_N^{(\frac{N}{4}n_2)(k_1+2k_2)}$$

By using the Equation 8, the Equation 9, and the Equation 10, the Equation 5 may be changed as in Equation 11.

【Equation 11】

$$X(k_1 + 2k_2 + 4k_3 + 8k_4)$$

$$= \sum_{n_4=0}^{1} \sum_{n_3=0}^{1} \sum_{n_2=0}^{1} \left[ \begin{array}{c} x\left(\frac{N}{4}n_2 + \frac{N}{8}n_3 + \frac{N}{16}n_4\right) \\ +(-1)^{k_1}x\left(\frac{N}{4}n_2 + \frac{N}{8}n_3 + \frac{N}{16}n_4 + \frac{N}{2}\right) \end{array} \right] W_N^{(\frac{N}{4}n_2)(k_1+2k_2)} W_N^{(\frac{N}{8}n_3+\frac{N}{16}n_4)(k_1+2k_2+4k_3+8k_4)}$$

In Equation 11, according to a development of $n_2$, the FFT operation may be configured as in Equation 12.

【Equation 12】

$$X(k_1 + 2k_2 + 4k_3 + 8k_4)$$

$$= \sum_{n_4=0}^{1} \sum_{n_3=0}^{1} \left[ \begin{array}{c} x\left(\frac{N}{8}n_3 + \frac{N}{16}n_4\right) \\ +(-1)^{k_1}x\left(\frac{N}{8}n_3 + \frac{N}{16}n_4 + \frac{N}{2}\right) \end{array} \right] W_N^{(\frac{N}{8}n_3+\frac{N}{16}n_4)(k_1+2k_2+4k_3+8k_4)}$$

$$+ \left[ \begin{array}{c} x\left(\frac{N}{4} + \frac{N}{8}n_3 + \frac{N}{16}n_4\right) \\ +(-1)^{k_1}x\left(\frac{N}{4} + \frac{N}{8}n_3 + \frac{N}{16}n_4 + \frac{N}{2}\right) \end{array} \right] W_N^{(\frac{N}{4}n_2)(k_1+2k_2)} W_N^{(\frac{N}{8}n_3+\frac{N}{16}n_4)(k_1+2k_2+4k_3+8k_4)}$$

In the Equation 12, $W_N^{(\frac{N}{4}n_2)(2k_2)}$ may be configured as in Equation 13.

【Equation 13】

$$W_N^{(\frac{N}{4}n_2)(2k_2)} = (-1)^{k_2}$$

In the Equation 12, according to a development of $W_N^{(\frac{N}{4}n_2)(2k_2)}$, the FFT operation may be configured as in Equation 14.

【Equation 14】

$$X(k_1 + 2k_2 + 4k_3 + 8k_4)$$

$$= \sum_{n_4=0}^{1} \sum_{n_2=0}^{1} \left[ \begin{array}{c} \left\{ \begin{array}{c} x\left(\frac{N}{8}n_3 + \frac{N}{16}n_4\right) \\ +(-1)^{k_1}x\left(\frac{N}{8}n_3 + \frac{N}{16}n_4 + \frac{N}{2}\right) \end{array} \right\} \\ +(-1)^{k_2}\left\{ \begin{array}{c} x\left(\frac{N}{8}n_3 + \frac{N}{16}n_4 + \frac{N}{4}\right) \\ +(-1)^{k_1}x\left(\frac{N}{8}n_3 + \frac{N}{16}n_4 + \frac{3N}{4}\right) \end{array} \right\} W_N^{k_1(\frac{N}{4}n_2)} \end{array} \right] W_N^{(\frac{N}{8}n_2+\frac{N}{16}n_4)(k_1+2k_2+4k_2+8k_4)}$$

In the Equation 14, $W_N^{(\frac{N}{8}n_3)(8k_4)}$ may be configured as in Equation 15.

【Equation 15】

$$W_N^{(\frac{N}{8}n_3)(8k_4)} = 1$$

According to the Equation 15, $W_N^{(\frac{N}{8}n_3)(k_1+2k_2+4k_3+8k_4)}$ may be configured as in Equation 16.

**【Equation 16】**

$$W_N^{(\frac{N}{8}n_3)(k_1+2k_2+4k_3+8k_4)} = W_N^{(\frac{N}{8}n_3)(k_1+2k_2+4k_3)}$$

According to the Equation 16, the FFT operation may be configured as in Equation 17.

**【Equation 17】**

$$X(k_1 + 2k_2 + 4k_3 + 8k_4)$$

$$= \sum_{n_4=0}^{1} \sum_{n_3=0}^{1} \left[ \begin{array}{c} \left\{ \begin{array}{c} x\left(\frac{N}{8}n_3 + \frac{N}{16}n_4\right) \\ +(-1)^{k_1}x\left(\frac{N}{8}n_3 + \frac{N}{16}n_4 + \frac{N}{2}\right) \end{array} \right\} \\ +(-1)^{k_2}\left\{ \begin{array}{c} x\left(\frac{N}{8}n_3 + \frac{N}{16}n_4 + \frac{N}{4}\right) \\ +(-1)^{k_1}x\left(\frac{N}{8}n_3 + \frac{N}{16}n_4 + \frac{3N}{4}\right) \end{array} \right\} W_N^{k_1(\frac{N}{4}n_2)} \end{array} \right] W_N^{(\frac{N}{8}n_3)(k_1+2k_2+4k_3)} W_N^{(\frac{N}{16}n_4)(k_1+2k_2+4k_3+8k_4)}$$

In the Equation 17, according to a development of $n_3$, the FFT operation may be configured as in Equation 18.

**【Equation 18】**

$$X(k_1 + 2k_2 + 4k_3 + 8k_4)$$

$$= \sum_{n_4=0}^{1} \left[ \begin{array}{c} \left\{ \begin{array}{c} x\left(\frac{N}{16}n_4\right) \\ +(-1)^{k_1}x\left(\frac{N}{16}n_4 + \frac{N}{2}\right) \end{array} \right\} \\ +(-1)^{k_2}\left\{ \begin{array}{c} x\left(\frac{N}{16}n_4 + \frac{N}{4}\right) \\ +(-1)^{k_1}x\left(\frac{N}{16}n_4 + \frac{3N}{4}\right) \end{array} \right\} W_N^{k_1(\frac{N}{4}n_2)} \end{array} \right] W_N^{(\frac{N}{16}n_4)(k_1+2k_2+4k_3+8k_4)}$$

$$+ \left[ \begin{array}{c} \left\{ \begin{array}{c} x\left(\frac{N}{8} + \frac{N}{16}n_4\right) \\ +(-1)^{k_1}x\left(\frac{N}{8} + \frac{N}{16}n_4 + \frac{N}{2}\right) \end{array} \right\} \\ +(-1)^{k_2}\left\{ \begin{array}{c} x\left(\frac{N}{8} + \frac{N}{16}n_4 + \frac{N}{4}\right) \\ +(-1)^{k_1}x\left(\frac{N}{8} + \frac{N}{16}n_4 + \frac{3N}{4}\right) \end{array} \right\} W_N^{k_1(\frac{N}{4}n_2)} \end{array} \right] W_N^{(\frac{N}{8}n_3)(k_1+2k_2+4k_3)} W_N^{(\frac{N}{16}n_4)(k_1+2k_2+4k_3+8k_4)}$$

In the Equation 18, $W_N^{(\frac{N}{8}n_3)(4k_3)}$ may be configured as in Equation 19.

**【Equation 19】**

$$W_N^{(\frac{N}{8}n_3)(4k_3)} = (-1)^{k_3}$$

According to the Equation 19, the FFT operation may be configured as in Equation 20.

【Equation 20】

$$X(k_1 + 2k_2 + 4k_3 + 8k_4)$$

$$= \sum_{n_4=0}^{1} \left[ \left[ +(-1)^{k_2} \left\{ \begin{array}{c} \left\{ \begin{array}{c} x\left(\frac{N}{16}n_4\right) \\ +(-1)^{k_1}x\left(\frac{N}{16}n_4 + \frac{4N}{8}\right) \end{array} \right\} \\ \left\{ \begin{array}{c} x\left(\frac{N}{16}n_4 + \frac{2N}{8}\right) \\ +(-1)^{k_1}x\left(\frac{N}{16}n_4 + \frac{6N}{8}\right) \end{array} \right\} W_N^{k_1(\frac{N}{4}n_2)} \end{array} \right] \\ +(-1)^{k_3}\left[ +(-1)^{k_2}\left\{ \begin{array}{c} \left\{ \begin{array}{c} x\left(\frac{N}{16}n_4 + \frac{N}{8}\right) \\ +(-1)^{k_1}x\left(\frac{N}{16}n_4 + \frac{5N}{8}\right) \end{array} \right\} \\ \left\{ \begin{array}{c} x\left(\frac{N}{16}n_4 + \frac{3N}{8}\right) \\ +(-1)^{k_1}x\left(\frac{N}{16}n_4 + \frac{7N}{8}\right) \end{array} \right\} W_N^{k_1(\frac{N}{4}n_2)} \end{array} \right\} W_N^{(k_1+2k_2)(\frac{N}{8}n_3)} \right] \right] W_N^{(\frac{N}{16}n_4)(k_1+2k_2+4k_3+8k_4)}$$

In the Equation 20, $W_N^{(\frac{N}{16}n_4)(8k_4)}$ may be configured as in Equation 21.

【Equation 21】

$$W_N^{(\frac{N}{16}n_4)(8k_4)} = (-1)^{k_4}$$

According to the Equation 21 and a development of $n_4$, the FFT operation may be configured as in Equation 22.

【Equation 22】

$$X(k_1 + 2k_2 + 4k_3 + 8k_4)$$

$$= \left[ +(-1)^{k_3}\left[ +(-1)^{k_2}\left[ \begin{array}{c} \left\{x(0) + (-1)^{k_1}x\left(\frac{8N}{16}\right)\right\} \\ +(-1)^{k_2}\left\{x\left(\frac{4N}{16}\right) + (-1)^{k_1}x\left(\frac{12N}{16}\right)\right\} W_N^{k_1(\frac{N}{4}n_2)} \end{array} \right] \\ +(-1)^{k_3}\left[ \begin{array}{c} \left\{x\left(\frac{2N}{16}\right) + (-1)^{k_1}x\left(\frac{10N}{16}\right)\right\} \\ +(-1)^{k_2}\left\{x\left(\frac{6N}{16}\right) + (-1)^{k_1}x\left(\frac{14N}{16}\right)\right\} W_N^{k_1(\frac{N}{4}n_2)} \end{array} \right] W_N^{(k_1+2k_2)(\frac{N}{8}n_3)} \right] \\ +(-1)^{k_4}\left[ +(-1)^{k_3}\left[ \begin{array}{c} \left\{x\left(\frac{N}{16}\right) + (-1)^{k_1}x\left(\frac{9N}{16}\right)\right\} \\ +(-1)^{k_2}\left\{x\left(\frac{5N}{16}\right) + (-1)^{k_1}x\left(\frac{13N}{16}\right)\right\} W_N^{k_1(\frac{N}{4}n_2)} \end{array} \right] \\ +(-1)^{k_3}\left[ \begin{array}{c} \left\{x\left(\frac{3N}{16}\right) + (-1)^{k_1}x\left(\frac{11N}{16}\right)\right\} \\ +(-1)^{k_2}\left\{x\left(\frac{7N}{16}\right) + (-1)^{k_1}x\left(\frac{15N}{16}\right)\right\} W_N^{k_1(\frac{N}{4}n_2)} \end{array} \right] W_N^{(k_1+2k_2)(\frac{N}{8}n_3)} \right] W_N^{(k_1+2k_2+4k_3)(\frac{N}{16}n_4)} \right]$$

A signal flow graph 800 may be configured according to the Equation 22. The signal flow graph 800 may illustrate an FFT operation.

According to an embodiment, the signal flow graph 800 may be configured with a plurality of stages. For example, the signal flow graph 800 may include a stage 801, a stage 802, a stage 803, and a stage 804. The OFDM modulation circuit may perform an operation of the Equation 22 by sequentially performing operations related to the stage 801 to the stage 804.

Referring to the signal flow graph 800, as an FFT operation on a symbol sequence (or a symbol) configured based on a bit-reversed order is performed, a symbol sequence (or a symbol) configured based on a natural bit order may be output (or obtained). As the FFT operation is performed, since the symbol sequence (or the symbol) is configured based on the natural bit order, memory for arranging the symbol sequence (or the symbol) (or arranging an FFT index (a time domain index)) may not be required.

As described above, when an FFT operation circuit is configured as the DIT FFT structure, a sequence (or a symbol) configured based on the natural bit order may be obtained as an output of the FFT operation circuit. Accordingly, the OFDM demodulation circuit may not include memory (or a buffer) for a reordering operation. However, memory (or a buffer) for the cyclic shift operation may be required in the OFDM demodulation circuit.

According to an embodiment, when the cyclic shift operation is performed as the output of the FFT operation circuit and the sequence (or the symbol) configured based on the natural bit order is obtained, the memory (or the buffer) for the cyclic shift operation may not be required. A structure of the FFT operation circuit for performing the cyclic shift operation and obtaining the sequence (or the symbol) configured based on the natural bit order will be described later with reference to FIG. 9.

Referring to FIG. 9, in order to configure the FFT operation circuit using the cyclic shift operation, in the Equation 22 described above, $k_4$ may be substituted with '$k_4$. For example, $k_4$ may be an MSB of a bit sequence of an FFT index (a frequency domain index). For example, '$k_4$ may be configured as in Equation 23.

【Equation 23】

$$`k_4 = (k_4+1) \bmod 2$$

Referring to Equation 23, '$k_1$ is a value obtained by performing a modulo 2 operation on $k_1+1$.

As $k_4$ is substituted with '$k_4$ in the Equation 22 described above, the output of the FFT operation circuit may be cyclically shifted by half. The above-described equation may be applied to the FFT operation of a size of $2^n$. As $k_4$ is substituted with '$k_1$ in the Equation 22 described above, a signal flow graph 900 may be configured.

The signal flow graph 900 of FIG. 9 may be configured with a plurality of stages. For example, the signal flow graph 900 may include a stage 901, a stage 902, a stage 903, and a stage 904. The FFT operation circuit (or the OFDM demodulation circuit) may sequentially perform operations related to the stage 901 to the stage 904. For example, the stage 904 may be configured by switching (or changing) a sign for the last operation of the stage 804 as k4 is substituted with '$k4.

Referring to the signal flow graph 900 related to the FFT operation circuit, input data of the FFT operation circuit may be configured with a symbol sequence (or a symbol) configured based on the bit-reversed order. Output data of the FFT operation circuit may be configured with a symbol sequence (or a symbol) to which the cyclic shift operation is applied to a symbol sequence (or a symbol) configured based on the natural bit order.

Since the output data of the FFT operation circuit is configured with the symbol sequence (or the symbol) to which the cyclic shift operation is applied to the symbol sequence (or the symbol) configured based on the natural bit order, memory (or a buffer) for arranging the symbol sequence (or arranging the FFT index (the time domain index)) and memory (or a buffer) for performing the cyclic shift operation may not be required. The above-described equation transformation may not cause an increase in complexity of a system.

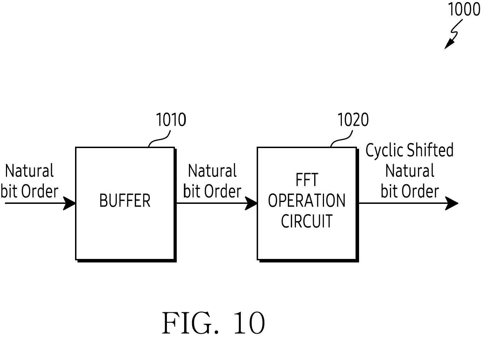

FIG. 10 illustrates an OFDM demodulation circuit for performing an FFT operation for a cyclic shift operation and a reordering operation.

Referring to FIG. 10, an OFDM demodulation circuit 1000 may include a buffer 1010 and an FFT operation circuit 1020. The FFT operation circuit 1020 may be configured based on the signal flow graph 900 of FIG. 9.

When the FFT operation circuit 1020 is configured based on the signal flow graph 900 of FIG. 9, as an FFT operation on a symbol sequence (or a symbol) configured based on a bit-reversed order is performed in the FFT operation circuit 1020, a symbol sequence (or a symbol) to which a cyclic shift operation is applied to a symbol sequence (or a symbol) configured based on a natural bit order may be output (or obtained).

For example, the buffer 1010 may be used to perform a digital AGC operation and to input the symbol sequence (or the symbol) configured based on the bit-reversed order to the FFT operation circuit 1020. Since the symbol sequence (or the symbol) is stored in memory (e.g., the buffer 1010) before being input to the FFT operation circuit 1020, the OFDM demodulation circuit 1000 may output the symbol sequence (or the symbol) configured based on the natural bit order, based on the bit-reversed order. As an example, the OFDM demodulation circuit 1000 may set a read address for outputting the symbol sequence (or the symbol) based on the bit-reversed order. The symbol sequence (or the symbol) configured according to the bit-reversed order may be input to the FFT operation circuit 1020.

Output data of the FFT operation circuit 1020 may be configured with a symbol sequence (or a symbol) to which the cyclic shift operation by half of an FFT size is applied to the symbol sequence (or the symbol) configured based on the natural bit order. Accordingly, the OFDM demodulation circuit 1000 may not include memory (or a buffer) for arranging the symbol sequence (or the symbol) and memory (or a buffer) for performing the cyclic shift operation. For example, since a guard band is located in a central area of the symbol sequence as in FIG. 6B, the same output as output of FIG. 5A and FIG. 5B may be obtained through the OFDM demodulation circuit 1000 without memory.

In the above-described embodiment, an example in which a size of an FFT is set to 16 has been described, but this is for convenience of description, and the size of the FFT may be variously set. In addition, although the above-described embodiments have been described based on a Radix 2 algorithm, this is for convenience of description. A technical feature according to the above-described embodiments may be applied to various algorithms including a Radix 4 algorithm and a Radix 2^2 algorithm.

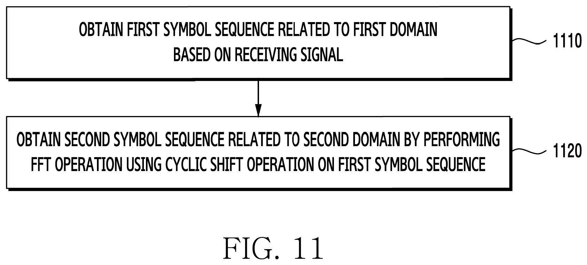

FIG. 11 illustrates a flowchart related to an operation of an electronic device for performing an FFT operation using a cyclic shift operation.

In operation 1110 and operation 1120, the electronic device may include at least one processing circuit for OFDM demodulation to change a domain of a symbol sequence from a first domain to a second domain. For example, an example of the electronic device according to the operation 1110 to the operation 1120 may be an example of the OFDM demodulation circuit 1000 of FIG. 10.

Referring to FIG. 11, in the operation 1110, the at least one processing circuit of the electronic device may obtain a first symbol sequence related to the first domain based on a receiving signal. For example, the at least one processing circuit may obtain the first symbol sequence related to the first domain based on the receiving signal obtained from an external electronic device. For example, the first domain may be a time domain. The first domain may include the time domain. The first symbol sequence may be configured based on the time domain.

For example, when the electronic device corresponds to a base station, the external electronic device may correspond to a terminal. For example, when the electronic device corresponds to a terminal, the external electronic device may correspond to a base station.

For example, the at least one processing circuit may obtain a third symbol sequence related to the first domain from the receiving signal. The at least one processing circuit may store the third symbol sequence related to the first domain in a second buffer (e.g., the buffer 1010 of FIG. 10). The at least one processing circuit may perform an automatic gain control operation based on the third symbol sequence. The at least one processing circuit may identify an average value of power of the third symbol sequence stored in the second buffer and perform the automatic gain control operation based on the average value.

For example, the at least one processing circuit may obtain the first symbol sequence based on the third symbol sequence by using the second buffer. The third symbol sequence may be configured based on a natural bit order. The first symbol sequence may be configured based on a bit-reversed order. The at least one processing circuit may obtain (or output) the first symbol sequence by changing an output order of the third symbol sequence stored in the second buffer.

The third symbol sequence being configured based on the natural bit order may mean that an FFT index (or a frequency domain index) is sequentially configured. As an example, the first symbol sequence being configured based on the natural bit order may mean that the FFT index (or the frequency domain index) is configured similarly to an input of the signal flow graph 700 of FIG. 7.

The first symbol sequence being configured based on the bit-reversed order may mean that an FFT index (or a time domain index) is configured in the bit-reversed order. As an example, the first symbol sequence being configured based on the bit-reversed order may mean that the FFT index (or the time domain index) is configured similarly to the input of the signal flow graph 900 of FIG. 9.

According to an embodiment, a size of the second buffer may be set based on an FFT size of an FFT operation performed below. For example, the size of the second buffer may be set to twice the FFT size.

In operation 1120, the at least one processing circuit may obtain a second symbol sequence related to the second domain by performing the FFT operation using the cyclic shift operation on the first symbol sequence.

For example, the at least one processing circuit may perform the FFT operation using the cyclic shift operation on the first symbol sequence. As an example, the at least one processing circuit may perform the FFT operation using the cyclic shift operation on the first symbol sequence without a first buffer (e.g., the buffer 523 of FIG. 5B) for the cyclic shift operation.

For example, for each FFT index of FFT indexes according to an FFT size, related to the first domain, the FFT operation using the cyclic shift operation may include an operation to change a value of the most significant bit (MSB) of a bit sequence of a corresponding FFT index from 0 to 1 or 1 to 0. For example, the FFT operation using the cyclic shift operation may be performed based on a decimation in time (DIT) FFT structure.

For example, the FFT operation using the cyclic shift operation may be performed based on a plurality of twiddle factors. The FFT operation using the cyclic shift operation may be configured a plurality of steps (or a plurality of stages) based on the plurality of twiddle factors. The plurality of steps may include the stage 901 to the stage 904 of the signal flow graph 900 of FIG. 9.

For example, the at least one processing circuit may perform the FFT operation using the cyclic shift operation on the first symbol sequence without the first buffer for the cyclic shift operation. Since the first symbol sequence is configured based on the bit-reversed order, the first symbol sequence configured based on the bit-reversed order may be input to a circuit (e.g., the FFT operation circuit 1020 of FIG. 10) configured for the FFT operation.

The at least one processing circuit may obtain the second symbol sequence related to the second domain. For example, the at least one processing circuit may obtain the second symbol sequence related to the second domain based on a result of the FFT operation using the cyclic shift operation. For example, the second domain may be a frequency domain. The second domain may include the frequency domain. The second symbol sequence may be configured based on the frequency domain. The second symbol sequence may be configured based on the natural bit order on which the cyclic shift operation is performed (or a cyclic shifted natural bit order). The at least one processing circuit may not include the first buffer for the cyclic shift operation. A storage area for the first buffer may not be configured in the electronic device (or the at least one processing circuit).

The second symbol sequence being configured based on the natural bit order on which the cyclic shift operation is performed (or the cyclic shifted natural bit order) may mean that an FFT index (or a frequency domain index) is configured similarly to an output of the signal flow graph 900 of FIG. 9. For example, the at least one processing circuit may obtain the second symbol sequence shifted by half of the FFT size based on the FFT operation using the cyclic shift operation.

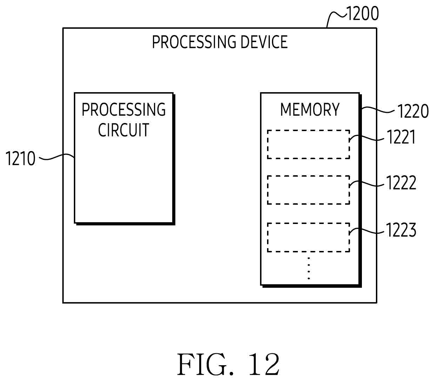

FIG. 12 illustrates an example of a configuration of a processing device.

Referring to FIG. 12, a processing device 1200 may be configured with one or more chips. For example, the processing device 1200 may be configured with a field programmable gate array (FPGA). For example, the processing device 1200 may be configured based on an application specific integrated circuit (ASIC). For example, an example of the processing device 1200 may be the electronic device (or the OFDM demodulation circuit) described above. For example, the processing device 1200 may perform at least some or all of functions of an RU. However, it is not limited thereto. The processing device 1200 may perform at least some or all of functions of a DU.

For example, the processing device 1200 may be controlled by a processor (or at least a portion of the processor). As an example, the processing device 1200 may be controlled by the processor 380 of FIG. 3B. For example, the processing device 1200 may be configured with the at least a portion of the processor.

According to an embodiment, the processing device 1200 may include a processing circuit 1210 and memory 1220.

For example, the processing circuit 1210 may be an example of the at least one processing circuit of FIG. 11. The processing circuit 1210 may include at least one component for OFDM demodulation. The processing circuit 1210 may perform an FFT operation of a DIT FFT structure (or a DIF FFT structure) according to a configuration of the at least one component.

The memory 1220 may include a plurality of storage spaces. The memory 1220 may be divided into the plurality of storage spaces. For example, the memory 1220 may include a first storage space 1221, a second storage space 1222, and/or a third storage space 1223. As an example, the first storage space 1221 may be allocated for the first buffer (e.g., the buffer 1010 of FIG. 10) described above. According to an embodiment, the memory 1220 may be configured with one memory (or one storage circuit). For example, storage spaces may be divided within one memory so that the plurality of storage spaces (e.g., the first storage space 1221, the second storage space 1222, and the third storage space 1223) may be configured. According to an embodiment, the memory 1220 may be configured with a plurality of memories (or a plurality of storage circuits). Among the plurality of memories, a first number of memories may be used for the first storage space 1221. Among the plurality of memories, a second number of memories may be used for the second storage space 1222. Among the plurality of memories, a third number of memories may be used for the third storage space 1223.

According to an embodiment, an electronic device (e.g., the OFDM demodulation circuit 1000) may comprise memory, and at least one processing circuit for orthogonal frequency division multiplexing (OFDM) demodulation to change a domain of a symbol sequence from a first domain to a second domain. The at least one processing circuit may be configured to obtain, based on a receiving signal obtained from an external electronic device, a first symbol sequence related to the first domain. The at least one processing circuit may be configured to obtain a second symbol sequence related to the second domain by performing a fast Fourier transform (FFT) operation using a cyclic shift operation on the first symbol sequence. For each fast Fourier transform (FFT) index of FFT indexes according to an FFT size, related to the second domain, the FFT operation using the cyclic shift operation may comprise an operation to change a value of the most significant bit (MSB) of a bit sequence of a corresponding FFT index from 0 to 1 or 1 to 0.

According to an embodiment, the first symbol sequence may be configured based on a bit reversed order. The second symbol sequence may be configured based on a natural bit order in which the cyclic shift operation is performed.

According to an embodiment, the at least one processing circuit may be configured to perform the FFT operation using the cyclic shift operation on the first symbol sequence without a first buffer for the cyclic shift operation.

According to an embodiment, the at least one processing circuit may be configured to store a third symbol sequence related to the first domain, obtained from the receiving signal, in a second buffer. The at least one processing circuit may be configured to perform, based on the third symbol sequence, an automatic gain control operation.

According to an embodiment, the third symbol sequence may be configured based on a natural bit order.

According to an embodiment, the at least one processing circuit may be configured to obtain, based on the third symbol sequence, the first symbol sequence using the second buffer.

According to an embodiment, a size of the second buffer may be set to twice the FFT size.

According to an embodiment, the FFT operation using the cyclic shift operation may be performed based on a plurality of twiddle factors.

According to an embodiment, the at least one processing circuit may be configured to obtain, based on the FFT operation using the cyclic shift operation, the second symbol sequence which is shifted by half of the FFT size.

According to an embodiment, the FFT operation using the cyclic shift operation may be performed based on a decimation in time (DIT) FFT structure.

According to an embodiment, a method performed by an electronic device may comprise obtaining, based on a receiving signal obtained from an external electronic device, a first symbol sequence related to a first domain. The method may comprise obtaining a second symbol sequence related to a second domain by performing a fast Fourier transform (FFT) operation using a cyclic shift operation on the first symbol sequence. For each fast Fourier transform (FFT) index of FFT indexes according to an FFT size, related to the second domain, the FFT operation using the cyclic shift operation may comprise an operation to change a value of the most significant bit (MSB) of a bit sequence of a corresponding FFT index from 0 to 1 or 1 to 0.

According to an embodiment, the first symbol sequence may be configured based on a bit reversed order. The second symbol sequence may be configured based on a natural bit order in which the cyclic shift operation is performed.

According to an embodiment, the method may comprise performing the FFT operation using the cyclic shift operation on the first symbol sequence without a first buffer for the cyclic shift operation.

According to an embodiment, the method may comprise storing a third symbol sequence related to the first domain, obtained from the receiving signal, in a second buffer. The method may comprise performing, based on the third symbol sequence, an automatic gain control operation.

According to an embodiment, the third symbol sequence may be configured based on a natural bit order.

According to an embodiment, the method may comprise obtaining, based on the third symbol sequence, the first symbol sequence using the second buffer.

According to an embodiment, a size of the second buffer may be set to twice the FFT size.

According to an embodiment, the FFT operation using the cyclic shift operation may be performed based on a plurality of twiddle factors.

According to an embodiment, the method may comprise obtaining, based on the FFT operation using the cyclic shift operation, the second symbol sequence which is shifted by half of the FFT size.

According to an embodiment, the FFT operation using the cyclic shift operation may be performed based on a decimation in time (DIT) FFT structure.

According to an embodiment, an electronic device (e.g., the OFDM demodulation circuit 1000) may comprise memory, comprising one or more storage media, storing instructions for orthogonal frequency division multiplexing (OFDM) demodulation to change a domain of a symbol sequence from a first domain to a second domain, and at least one processing circuit. The instructions, when executed by the at least one processing circuit individually or collectively, may cause the electronic device to obtain, based on a receiving signal obtained from an external electronic device, a first symbol sequence related to the first domain. The instructions, when executed by the at least one processing circuit individually or collectively, may cause the electronic device to obtain a second symbol sequence related to the second domain by performing a fast Fourier transform (FFT) operation using a cyclic shift operation on the first symbol sequence. For each fast Fourier transform (FFT) index of FFT indexes according to an FFT size, related to the second domain, the FFT operation using the cyclic shift operation may comprise an operation to change a value of the most significant bit (MSB) of a bit sequence of a corresponding FFT index from 0 to 1 or 1 to 0.

According to an embodiment, the first symbol sequence may be configured based on a bit reversed order. The second symbol sequence may be configured based on a natural bit order in which the cyclic shift operation is performed.

According to an embodiment, the instructions, when executed by the at least one processing circuit individually or collectively, may cause the electronic device to perform the FFT operation using the cyclic shift operation on the first symbol sequence without a first buffer for the cyclic shift operation.

According to an embodiment, the instructions, when executed by the at least one processing circuit individually or collectively, may cause the electronic device to store a third symbol sequence related to the first domain, obtained from the receiving signal, in a second buffer. The instructions, when executed by the at least one processing circuit individually or collectively, may cause the electronic device to perform, based on the third symbol sequence, an automatic gain control operation.

According to an embodiment, the third symbol sequence may be configured based on a natural bit order.

According to an embodiment, the instructions, when executed by the at least one processing circuit individually or collectively, may cause the electronic device to obtain, based on the third symbol sequence, the first symbol sequence using the second buffer.

According to an embodiment, a size of the second buffer may be set to twice the FFT size.

According to an embodiment, the FFT operation using the cyclic shift operation may be performed based on a plurality of twiddle factors.

According to an embodiment, the instructions, when executed by the at least one processing circuit individually or collectively, may cause the electronic device to obtain, based on the FFT operation using the cyclic shift operation, the second symbol sequence which is shifted by half of the FFT size.

According to an embodiment, the FFT operation using the cyclic shift operation may be performed based on a decimation in time (DIT) FFT structure.

According to the embodiment described above, an OFDM demodulation circuit that does not include memory (or a buffer) for performing a reordering operation and a cyclic shift operation at an output end of an FFT operation circuit may be configured. A size of memory for an FFT operation circuit (or an IFFT operation circuit) configured as a DIF FFT structure may be smaller than a size of memory for an FFT operation circuit (or an IFFT operation circuit) configured as a FFT decimation in time fast Fourier transform (DIT FFT) structure, however, the FFT operation circuit (e.g., the FFT operation circuit 1020) of the OFDM demodulation circuit (e.g., the OFDM demodulation circuit 1000) according to the embodiment described above may be configured as the DIT FFT structure. Even when the FFT operation circuit (e.g., the FFT operation circuit 1020) of the OFDM demodulation circuit (e.g., the OFDM demodulation circuit 1000) according to the embodiment described above is configured as the DIT FFT structure, since the memory for performing the reordering operation and the cyclic shift operation is not configured at the output end of the FFT operation circuit, memory usage may be reduced. Since a storage operation for output data of the FFT operation circuit is omitted, a latency of at least an OFDM symbol may be reduced, and additional heat generation and power consumption may be reduced.

According to the embodiments described above, an input buffer may not be used, or a size of an output buffer may be reduced without performance degradation through a simple change of equations. According to the embodiments described above, since a storage procedure is simplified, latency of an OFDM symbol or more may be reduced. According to the embodiments described above, as hardware resource usage is reduced, heat generation and power consumption may be reduced. Since an IFFT operation is required to be performed per antenna in the OFDM modulation circuit, heat generation and power consumption may be greatly reduced in a system having a large bandwidth and many antennas.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. An electronic device comprising:

   memory, comprising one or more storage media, storing instructions for orthogonal frequency division multiplexing (OFDM) demodulation to change a domain of a symbol sequence from a first domain to a second domain; and
   at least one processing circuit,
   wherein the instructions, when executed by the at least one processing circuit individually or collectively, cause the electronic device to:

   obtain, based on a receiving signal obtained from an external electronic device, a first symbol sequence related to the first domain, and
   obtain a second symbol sequence related to the second domain by performing a fast Fourier transform (FFT) operation using a cyclic shift operation on the first symbol sequence,
   wherein, for each fast Fourier transform (FFT) index of FFT indexes according to an FFT size, related to the second domain, the FFT operation using the cyclic shift operation comprises an operation to change a value of the most significant bit (MSB) of a bit sequence of a corresponding FFT index from 0 to 1 or 1 to 0.

2. The electronic device of claim 1, wherein the first symbol sequence is configured based on a bit reversed order, and wherein the second symbol sequence is configured based on a natural bit order in which the cyclic shift operation is performed.

3. The electronic device of claim 2, wherein the instructions, when executed by the at least one processing circuit individually or collectively, further cause the electronic device to perform the FFT operation using the cyclic shift operation on the first symbol sequence without a first buffer for the cyclic shift operation.

4. The electronic device of claim 3, wherein the instructions, when executed by the at least one processing circuit individually or collectively, further cause the electronic device to:

   store a third symbol sequence related to the first domain, obtained from the receiving signal, in a second buffer and
   perform, based on the third symbol sequence, an automatic gain control operation.

5. The electronic device of claim 4, wherein the third symbol sequence is configured based on a natural bit order.

6. The electronic device of claim 5, wherein the instructions, when executed by the at least one processing circuit individually or collectively, further cause the electronic device to obtain, based on the third symbol sequence, the first symbol sequence using the second buffer.

7. The electronic device of claim 4, wherein a size of the second buffer is set to twice the FFT size.

8. The electronic device of claim 1, wherein the FFT operation using the cyclic shift operation is performed based on a plurality of twiddle factors.

9. The electronic device of claim 1 wherein the instructions, when executed by the at least one processing circuit individually or collectively, further cause the electronic device to obtain, based on the FFT operation using the cyclic shift operation, the second symbol sequence which is shifted by half of the FFT size.

10. The electronic device of claim 1, wherein the FFT operation using the cyclic shift operation is performed based on a decimation in time (DIT) FFT structure.

11. A method performed by an electronic device, comprising:

obtaining, based on a receiving signal obtained from an external electronic device, a first symbol sequence related to a first domain, and

obtaining a second symbol sequence related to a second domain by performing a fast Fourier transform (FFT) operation using a cyclic shift operation on the first symbol sequence,

wherein, for each fast Fourier transform (FFT) index of FFT indexes according to an FFT size, related to the second domain, the FFT operation using the cyclic shift operation comprises an operation to change a value of the most significant bit (MSB) of a bit sequence of a corresponding FFT index from 0 to 1 or 1 to 0.

12. The method of claim 11, wherein the first symbol sequence is configured based on a bit reversed order, and wherein the second symbol sequence is configured based on a natural bit order in which the cyclic shift operation is performed.

13. The method of claim 12, wherein the method further comprises performing the FFT operation using the cyclic shift operation on the first symbol sequence without a first buffer for the cyclic shift operation.

14. The method of claim 13, wherein the method further comprises:

storing a third symbol sequence related to the first domain, obtained from the receiving signal, in a second buffer, and

performing, based on the third symbol sequence, an automatic gain control operation.

15. The method of claim 14, wherein the third symbol sequence is configured based on a natural bit order.

FIG. 1

FIG. 2A

FIG. 2B

210

DU

310

320

330

TRANSCEIVER

MEMORY

PROCESSOR

FIG. 3A

220

RU

360

RF
TRANSCEIVER

365

FRONTHAUL
TRANSCEIVER

370

MEMORY

380

PROCESSOR

FIG. 3B

FIG. 4

510

| | 511 | | | 512 | | | 513 | |
|---|---|---|---|---|---|---|---|---|

Natural bit Order → | BUFFER | → Natural bit Order → | IFFT OPERATION CIRCUIT | → Bit-Reversed Order → | BUFFER | → CP Added Natural bit Order →

FIG. 5A

520

521

522

523

Natural
bit Order

SIGNAL (531)

BUFFER

Natural
bit Order

FFT
OPERATION
CIRCUIT

Bit-
Reversed
Order

BUFFER

CP Added
Natural
bit Order

FIG. 5B

Before Pre-iFFT Cyclic shift

0     602     nTone/2     601     nTone

After Pre-iFFT Cyclic Shift

Guard Band

0     601     nTone/2     N_FFT-nTone/2-1     602     N_FFT-1

FIG. 6A

FIG. 6B

EP 4 787 793 A1

| n1 | n2 | n3 | n4 | n |
|----|----|----|----|----|
| 0 | 0 | 0 | 0 | 0 |
| 0 | 0 | 0 | 1 | 1 |
| 0 | 0 | 1 | 0 | 2 |
| 0 | 0 | 1 | 1 | 3 |
| 0 | 1 | 0 | 0 | 4 |
| 0 | 1 | 0 | 1 | 5 |
| 0 | 1 | 1 | 0 | 6 |
| 0 | 1 | 1 | 1 | 7 |
| 1 | 0 | 0 | 0 | 8 |
| 1 | 0 | 0 | 1 | 9 |
| 1 | 0 | 1 | 0 | 10 |
| 1 | 0 | 1 | 1 | 11 |
| 1 | 1 | 0 | 0 | 12 |
| 1 | 1 | 0 | 1 | 13 |
| 1 | 1 | 1 | 0 | 14 |
| 1 | 1 | 1 | 1 | 15 |

701   702   703   704

FIG. 7

| k1 | k2 | k3 | k4 | k |
|----|----|----|----|----|
| 0 | 0 | 0 | 0 | 0 |
| 0 | 0 | 0 | 1 | 8 |
| 0 | 0 | 1 | 0 | 4 |
| 0 | 0 | 1 | 1 | 12 |
| 0 | 1 | 0 | 0 | 2 |
| 0 | 1 | 0 | 1 | 10 |
| 0 | 1 | 1 | 0 | 6 |
| 0 | 1 | 1 | 1 | 14 |
| 1 | 0 | 0 | 0 | 1 |
| 1 | 0 | 0 | 1 | 9 |
| 1 | 0 | 1 | 0 | 5 |
| 1 | 0 | 1 | 1 | 13 |
| 1 | 1 | 0 | 0 | 3 |
| 1 | 1 | 0 | 1 | 11 |
| 1 | 1 | 1 | 0 | 7 |
| 1 | 1 | 1 | 1 | 15 |

| k1 | k2 | k3 | k4 | k |
|----|----|----|----|----|
| 0 | 0 | 0 | 0 | 0 |
| 1 | 0 | 0 | 0 | 1 |
| 0 | 1 | 0 | 0 | 2 |
| 1 | 1 | 0 | 0 | 3 |
| 0 | 0 | 1 | 0 | 4 |
| 1 | 0 | 1 | 0 | 5 |
| 0 | 1 | 1 | 0 | 6 |
| 1 | 1 | 1 | 0 | 7 |
| 0 | 0 | 0 | 1 | 8 |
| 1 | 0 | 0 | 1 | 9 |
| 0 | 1 | 0 | 1 | 10 |
| 1 | 1 | 0 | 1 | 11 |
| 0 | 0 | 1 | 1 | 12 |
| 1 | 0 | 1 | 1 | 13 |
| 0 | 1 | 1 | 1 | 14 |
| 1 | 1 | 1 | 1 | 15 |

800

804 803 802 801

FIG. 8

| n1 | n2 | n3 | n4 | n |
|----|----|----|----|----|
| 0 | 0 | 0 | 0 | 0 |
| 1 | 0 | 0 | 0 | 8 |
| 0 | 1 | 0 | 0 | 4 |
| 1 | 1 | 0 | 0 | 12 |
| 0 | 0 | 1 | 0 | 2 |
| 1 | 0 | 1 | 0 | 10 |
| 0 | 1 | 1 | 0 | 6 |
| 1 | 1 | 1 | 0 | 14 |
| 0 | 0 | 0 | 1 | 1 |
| 1 | 0 | 0 | 1 | 9 |
| 0 | 1 | 0 | 1 | 5 |
| 1 | 1 | 0 | 1 | 13 |
| 0 | 0 | 1 | 1 | 3 |
| 1 | 0 | 1 | 1 | 11 |
| 0 | 1 | 1 | 1 | 7 |
| 1 | 1 | 1 | 1 | 15 |

FIG. 9

1000

1010

1020

Natural
bit Order → BUFFER → Natural
bit Order → FFT
OPERATION
CIRCUIT → Cyclic Shifted
Natural
bit Order →

FIG. 10

OBTAIN FIRST SYMBOL SEQUENCE RELATED TO FIRST DOMAIN BASED ON RECEIVING SIGNAL — 1110

OBTAIN SECOND SYMBOL SEQUENCE RELATED TO SECOND DOMAIN BY PERFORMING FFT OPERATION USING CYCLIC SHIFT OPERATION ON FIRST SYMBOL SEQUENCE — 1120

FIG. 11

FIG. 12

EP 4 787 793 A1

## INTERNATIONAL SEARCH REPORT

| International application No. |
|---|
| **PCT/KR2024/013361** |

| A. | CLASSIFICATION OF SUBJECT MATTER |
|---|---|

**H04L 27/26**(2006.01)i

According to International Patent Classification (IPC) or to both national classification and IPC

| B. | FIELDS SEARCHED |
|---|---|

Minimum documentation searched (classification system followed by classification symbols)

H04L 27/26(2006.01); G06F 17/14(2006.01); H04B 1/692(2011.01); H04J 11/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복조(demodulation), FFT(fast Fourier transform), 순환 이동(cyclic shift), 도메인 (domain), MSB(most significant bit)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-0798968 B1 (SAMSUNG ELECTRONICS CO., LTD.) 28 January 2008 (2008-01-28)<br>See paragraphs [0049] and [0052]; and figure 4. | 1-15 |
| Y | JP 3797400 B2 (SONY CORP.) 19 July 2006 (2006-07-19)<br>See paragraphs [0009] and [0024]; claims 1-3; and figure 16. | 1-15 |
| Y | US 2013-0148694 A1 (HOFFMAN, Marc M. et al.) 13 June 2013 (2013-06-13)<br>See claims 1, 3-4, 8 and 16-17. | 2-8,10,12-15 |
| A | KR 10-2008-0078062 A (TELEFONAKTIEBOLAGET LM ERICSSON(PUBL)) 26 August 2008 (2008-08-26)<br>See paragraphs [0032]-[0084]. | 1-15 |
| A | US 2015-0195114 A1 (NEC CORPORATION) 09 July 2015 (2015-07-09)<br>See paragraphs [0049]-[0088]. | 1-15 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2024** | **20 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013361**

| Patent document cited in search report | | | Publication date (day/month/year) | Patent family member(s) | | | Publication date (day/month/year) |
|---|---|---|---|---|---|---|---|
| KR | 10-0798968 | B1 | 28 January 2008 | US | 2005-0201270 | A1 | 15 September 2005 |
| JP | 3797400 | B2 | 19 July 2006 | EP | 0880101 | A2 | 25 November 1998 |
| | | | | US | 6263356 | B1 | 17 July 2001 |
| US | 2013-0148694 | A1 | 13 June 2013 | US | 8787422 | B2 | 22 July 2014 |
| | | | | WO | 2013-090508 | A2 | 20 June 2013 |
| KR | 10-2008-0078062 | A | 26 August 2008 | BR | PI0619920 | A2 | 25 October 2011 |
| | | | | CN | 101331479 | A | 24 December 2008 |
| | | | | CN | 101331479 | B | 11 January 2012 |
| | | | | EP | 1960905 | A2 | 27 August 2008 |
| | | | | JP | 2009-519637 | A | 14 May 2009 |
| | | | | JP | 4903810 | B2 | 28 March 2012 |
| | | | | TW | 200741487 | A | 01 November 2007 |
| | | | | US | 2007-0133389 | A1 | 14 June 2007 |
| | | | | US | 7685220 | B2 | 23 March 2010 |
| | | | | WO | 2007-068438 | A2 | 21 June 2007 |
| US | 2015-0195114 | A1 | 09 July 2015 | JP | 5954415 | B2 | 20 July 2016 |
| | | | | US | 9525579 | B2 | 20 December 2016 |
| | | | | WO | 2014-013726 | A1 | 23 January 2014 |

Form PCT/ISA/210 (patent family annex) (July 2022)